Europäisches Patentamt

European Patent Office

Office européen des brevets

(11) Publication number: 0 507 243 A1

# EUROPEAN PATENT APPLICATION

(21) Application number: 92105488.8

(22) Date of filing: 30.03.92

(51) Int. Cl.5: G02B 6/38, G02B 6/28

(30) Priority: 01.04.91 JP 68307/91

(43) Date of publication of application:
07.10.92 Bulletin 92/41

(84) Designated Contracting States:
BE DE ES FR GB IT NL SE

(71) Applicant: SUMITOMO ELECTRIC INDUSTRIES, LTD.
5-33, Kitahama 4-chome, Chuo-ku
Osaka-shi, Osaka 541(JP)
Applicant: NIPPON TELEGRAPH AND TELEPHONE CORPORATION
1-6 Uchisaiwaicho 1-chome Chiyoda-ku Tokyo(JP)
Applicant: SUMIDEN OPCOM, LTD.
6-31, Omori-Nishi 7-chome
Ota-ku, Tokyo(JP)

(72) Inventor: Hattori, Tomoyuki, c/o Yokohama
Works of
Sumitomo Electric Ind., Ltd., 1, Taya-cho
Sakae-ku, Yokohama-shi, Kanagawa(JP)
Inventor: Suganuma, Hiroshi, c/o Yokohama
Works of
Sumitomo Electric Ind., Ltd., 1, Taya-cho
Sakae-ku, Yokohama-shi, Kanagawa(JP)
Inventor: Yoshikawa, Junichi, c/o Yokohama
Works of
Sumitomo Electric Ind., Ltd., 1, Taya-cho
Sakae-ku, Yokohama-shi, Kanagawa(JP)
Inventor: Takimoto, Hiroaki, c/o Yokohama
Works of
Sumitomo Electric Ind., Ltd., 1, Taya-cho
Sakae-ku, Yokohama-shi, Kanagawa(JP)
Inventor: Tomita, Nobuo
1097-4, Ishizuka, Johoku-cho
Higashi Ibaraki-gun, Ibaraki(JP)
Inventor: Arimoto, Kazuhiko, c/o Sumiden
Opcom Ltd.
6-31, Omorinishi 7-chome
Ota-ku, Tokyo(JP)

(74) Representative: Patentanwälte Grünecker, Kinkeldey, Stockmair & Partner
Maximilianstrasse 58
W-8000 München 22(DE)

(54) Reinforced optical fiber coupler and method of manufacture.

(57) The reinforced optical coupler comprises an optical coupler embedded in an adhesive matrix (4) in a first reinforcing member (3) made of quartz having a longitudinal slit down the entire length. A second reinforcing member (5) surrounds the first reinforcing member containing the adhesive and optical coupler.

A method of reinforcing an optical fiber coupler comprises the steps of locking the fusion zone of the optical fiber coupler to a first tubular reinforcing member having a slit in the longitudinal direction and arranging a second reinforcing member on the outer periphery of the first reinforcing member.

FIG. 1(a)

FIG. 1(b)

## BACKGROUND OF THE INVENTION

### Field Of The Invention

The present invention relates to a method of reinforcing an optical fiber coupler for use in branching and coupling optical fibers.

### Description of Related Art

Optical fiber couplers are manufactured by heating, fusion-bonding and stretching a plurality of optical fibers. However, because the fusion-bonded zone involved is extremely thin in outer diameter, the optical fiber coupler is easily affected by external force and changes in temperature. The problem is that its properties are prone to change or damage.

Therefore, it has been a common practice to lock such an optical fiber coupler to a reinforcing member having a linear expansion coefficient equivalent to that of quartz to protect the fusion-bonded zone from external force and to provide the optical fiber coupler with stable temperature response characteristics.

Japanese Utility Model Laid-Open No. 24308/1989 and Japanese Patent Laid-Open No. 63907/1989, for instance, disclose a plate member, a tubular member and a pipe having a semicircular cut at both ends for use as lock members. An epoxy, urethane or cyano thermosetting adhesive, or an ultraviolet-curing adhesive is used to lock a coupler to the pipe.

The conventional methods of reinforcing optical fiber couplers have presented some problems in that a great deal of labor is required. More specifically, the method of employing the tubular lock member as disclosed in Japanese Patent Laid-Open No. 63907/1989 requires applying an adhesive to the inner wall of the pipe. This work is troublesome and takes time. Although the use of the pipe having a semicircular cut at both ends as a lock member lessens the difficulty of applying an adhesive, there still are difficulties in preparing such a pipe having the semicircular cut at both ends.

The provision of the plate lock member, as disclosed in Japanese Utility Model Laid-Open No. 24308/1989, facilitates not only the application of an adhesive but also the preparation of the member.

Notwithstanding, the optical fiber coupling zone ought to be protected against external force after the optical fiber coupler is locked to the plate member and this necessitates reinforcing the coupling zone by covering part or all of it with an additional case, thus also requiring additional labor.

## SUMMARY OF THE INVENTION

In view of the foregoing problems, the present invention provides a coupler characterized by a tubular member as a first reinforcing member having a slit in the longitudinal direction and a second reinforcing member on the outer periphery of the first reinforcing member.

Although thermosetting, ultraviolet-curing, and similar adhesives may be used as a means of locking an optical fiber coupler to the first reinforcing member, in this case, a hot-melt adhesive is especially preferred for use.

Although silicone rubber, and the like, and metals such as aluminum and invar alloy may be used as the second reinforcing member, a heat-shrinkable tube is preferred.

Since the first reinforcing member according to the present invention is tubular and has the slit in the longitudinal direction, the reinforcing member is easy to make and also effective in protecting the first reinforcing member against external force. The optical fiber coupler is readily placed in position within the reinforcing member and adhesive is readily applied.

Using a hot-melt adhesive previously deposited in the first reinforcing member as a means of locking the optical fiber coupler thereto, the optical fiber coupler will be locked by simply heating the adhesive.

Further, the use of heat-shrinkable tubing as the second reinforcing member makes it feasible to cause the fusion of the hot-melt adhesive and the shrinkage of the heat-shrinkable tubing simultaneously. Labor can thus be shortened by a large margin.

## BRIEF DESCRIPTION OF THE DRAWINGS

FIG. 1(a) is a schematic diagram of an embodiment of an optical fiber coupler of the present invention; and
FIG. 1(b) is a diagram illustrating a first reinforcing member which is tubular in configuration and has a slit in the longitudinal direction;
FIG. 2 is a schematic diagram showing an outline of optical fiber coupler manufacturing equipment.

## DETAILED DESCRIPTION OF THE PREFERRED EMBODIMENT

The details of the invention will be explained by way of a descriptive example. Quartz pipe 2.0 mm⌀ in inner diameter and 4.0 mm⌀ in outer diameter shown in Fig. 1(b) was prepared as a first reinforcing member 3. The pipe had a slit 1.0 mm wide in the longitudinal direction. A hot-melt adhesive 4 mainly composed of ethylene vinyl acetate was used to lock an optical fiber coupler into the reinforcing member.

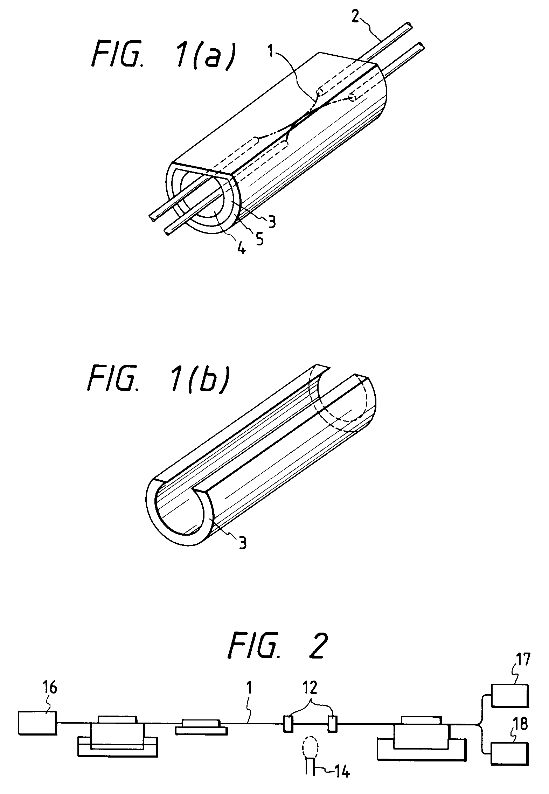

As a second reinforcing member 5 see Figure 1(a), a heat-shrinkable tube (Sumi-Tube of Sumitomo Electric Industries, Ltd.) of 6.0 mm⌀ in inner diameter before shrinkage and 3.0 mm⌀ after shrinkage was prepared.

Two pieces of conventional single mode fibers for 1.3 μm band were used to make by way of trial an optical fiber coupler whose splitting ratio was 50% at 1.3 μm by means of equipment shown in Fig. 2. In this case, the difference in refractive index between the core and the clad of the fiber was 0.3% and the respective diameters of the core and the clad were 8 μm and 125 μm.

More specifically, the optical fiber coupler was prepared through the steps of removing the coating materials 2 of the optical fibers, locking the exposed glass portions 1 with optical fiber clampers 12, fusion-bonding the glass portions 1 using a microtorch 14, and heat-stretching the fusion-bonded portion to provide a predetermined branch state while measuring light from a light source 16 by means of power meters 17, 18 to monitor the optical branch state of the coupler.

The first reinforcing member 3, the hot-melt adhesive 4 and the second reinforcing member 5 that had been prepared previously were used to lock the fusion-bonded zone thus heated and stretched.

The hot-melt adhesive was processed by extrusion-forming into a pipe before being inserted into both end portions of the first quartz pipe reinforcing member having a slit. A heat-shrinkable tube was disposed on the outer periphery of the quartz pipe. A reinforcing member prepared such a way was supported with a support plate 8. After stretching the support plate was moved and the fusion-bonded zone was covered with the reinforcing member.

Although the fusion-bonded zone can be locked by arranging the hot-melt adhesive thus processed in the pipe not less than 5 mm away from each end, it may be locked more stably by inserting the adhesive between 10 and 15 mm from the end.

With the prearrangement of the first reinforcing member 3, the hot-melt adhesive 4 and the second reinforcing member 5 in this way, the work of locking the fusion-bonded zone after the fusion-bonding of the glass portion requires only moving the reinforcing member to the fusion-bonded zone and heating it to about 200 °C. In other words, this locking process is quite simple and the time required therefor was less than three minutes.

The optical fiber coupler thus obtained was subjected to heat cycle testing at -40 to 85 °C so as to examine the fluctuation of insertion loss during the test with a LED having a wavelength of 1.3 μm. The favorable result obtained was lower than 0.2 dB.

In addition to quartz in the embodiment shown, materials such as ceramic, LCP and the like having a linear expansion coefficient equivalent to that of quartz may be used for the first reinforcing member. In this case, such a reinforcing member should have a slit in the longitudinal direction of the pipe, the slit preferably having a width of 20 - 100% of the inner diameter of the pipe.

As described in the embodiment shown, the first reinforcing member is tubular and has a slit in the longitudinal direction. Since it can be made readily and inexpensively with an excellent reinforcing effect, the work of locking the optical fiber coupler is substantially facilitated.

The combination of the hot-melt adhesive for locking the optical fiber coupler and the heat-shrinkable tubing as the second reinforcing member contributes to significantly shorten the time required for the optical fiber coupler to be protected, and also reduces the cost of manufacturing such an optical fiber coupler.

## Claims

1. A reinforced optical fiber coupler comprising:
   a coupler element formed by fusion-bonding and stretching a plurality of optical fibers;
   a first reinforcing tubular member having a longitudinal slit, wherein the optical fiber coupler is disposed, the coupler element being firmly connected thereto; and
   a second reinforcing member on the outer periphery of the first reinforcing tubular member.

2. A coupler as in claim 1, wherein the optical fiber coupler is firmly connected to the first reinforcing tubular member with a hot-melt adhesive.

3. A coupler as claimed in claim 1 wherein, the second reinforcing member is a heat shrinkable tube.

4. A coupler as claimed in claim 2 wherein, the second reinforcing member is a heat shrinkable tube.

5. A method of reinforcing an optical fiber coupler element formed by fusion-bonding and stretching a plurality of optical fibers, comprising the steps of:
   locking the optical fiber coupler element to a first tubular reinforcing member having a slit in the longitudinal direction; and

arranging a second reinforcing member on the outer periphery of the first reinforcing member.

6. A method as in claim 5, wherein the locking step comprises the steps of:

applying hot melt adhesive to the interior of the first reinforcing member; and

embedding the optical fiber coupler in the hot melt adhesive.

7. A method as claimed in claim 6, wherein the step of arranging a second reinforcing member on the outer periphery of the first reinforcing member comprises the step of:

heat-shrinking a heat shrinkable tube placed over the first reinforcing member.

FIG. 1(a)

FIG. 1(b)

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 124 927 (PHILIPS PATENTVERWALTUNGS GMBH) <br> * abstract; claims 1,3,5,6,9; figures 1,3 * <br> * page 1, paragraph 1 * <br> * page 2, line 26 - page 3, line 15 * <br> * page 3, line 30 - page 4, line 13 * <br> * page 5, line 6 - page 6, line 6 * | 1,5 | G02B6/38 <br> G02B6/28 |
| A | idem | 2-4,6,7 | |
| Y | PATENT ABSTRACTS OF JAPAN <br> vol. 11, no. 308 (P-624)8 October 1987 <br> & JP-A-62 099 705 ( HITACHI ) 9 May 1987 <br> * abstract * | 1,5 | |
| A | WO-A-8 902 608 (ASTER CORPORATION) <br> * abstract; figures 1A,9 * <br> * page 7, line 21 - line 30 * <br> * page 10, line 6 - line 17 * | 1,5 | |
| A | US-A-4 714 316 (MOORE ET AL.) <br> * abstract; figure 2 * <br> * column 3, line 21 - column 4, line 25 * | 1,5 | TECHNICAL FIELDS SEARCHED (Int. Cl.5 ) |
| A | PATENT ABSTRACTS OF JAPAN <br> vol. 13, no. 271 (P-889)22 June 1989 <br> * abstract * | 1,5 | G02B |
| D,A | & JP-A-1 063 907 (FURUKAWA ELECTRIC) 9 March 1989 | | |

The present search report has been drawn up for all claims

| Place of search | Date of completion of the search | Examiner |
|---|---|---|
| BERLIN | 18 JUNE 1992 | HYLLA W. |

EPO FORM 1503 03.82 (P0401)